# FASCICULE DE BREVET EUROPEEN

(11) **EP 1 190 378 B1**
(45) Date de publication et mention de la délivrance du brevet: **12.01.2005**
(21) Numéro de dépôt: 00925434.3
(22) Date de dépôt: 11.05.2000
(51) Int. Cl.: G06K 19/077

(54) **DISPOSITIF PORTABLE A CIRCUIT INTEGRE ET PROCEDE DE FABRICATION**
TRAGBARE VORRICHTUNG MIT EINER INTEGRIERTEN SCHALTUNG UND VERFAHREN ZUM HERSTELLEN DERSELBEN
PORTABLE INTEGRATED CIRCUIT DEVICE AND METHOD FOR THE PRODUCTION THEREOF

(30) Priorité: 31.05.1999 FR 9906849
(43) Date de publication de la demande: 27.03.2002
(73) Titulaire: Gemplus, 13881 Gémenos Cedex (FR)
(72) Inventeur: BOCCIA, Henri, F-13720 Belcodene (FR); BRUNET, Olivier, 13012 Marseille (FR); LIMOUSIN, Isabelle, F-13100 Aix en Provence (FR); PATRICE, Philippe, Résidence Les Deux Moulins, 13190 Allauch (FR)
(86) Numéro de dépôt international: PCT/FR2000/001271
(87) Numéro de publication internationale: WO 2000/073988

(56) Documents cités:
- EP-A- 0 254 444
- EP-A- 0 535 436
- DE-U- 29 819 389

## Description

L'invention concerne un dispositif portable à circuit intégré comportant un corps support et une mini-carte détachable de type carte à puce de format réduit par rapport au format standard des cartes à puces. Elle concerne également un procédé de fabrication dudit dispositif.

On rappelle que les cartes à circuit intégré à contact affleurants permettent d'effectuer par exemple des transactions sécurisées de type monétique, d'identification ou de télécommunications. Les dimensions des cartes ainsi que le positionnement des contacts sont définis par un standard correspondant aux normes internationales ISO 7810, 7816-1 et 7816-2.

Ce premier standard définit une carte avec ou sans contact comme un élément portable de faible épaisseur et de dimensions : 85 mm de longueur, 54 mm de largeur et 0.76 mm d'épaisseur.

Un deuxième standard a permis de définir le format des cartes à puces dédiées au marché de la téléphonie mobile.

Les cartes à puce dédiées à la téléphonie ont un format réduit par rapport au format ISO qui vient d'être rappelé. Il s'agit de mini-cartes, dénommées carte SIM de longueur 25 mm et de largeur 15 mm, l'épaisseur étant identique à l'épaisseur des cartes répondant au premier standard.

On rappelle qu'une carte à circuit intégré à contact comporte un dispositif plastique PVC ou ABS selon le format standard. Ce dispositif porte au moins un microcircuit électronique (appelé également module électronique ou micromodule électronique dans la littérature) et une série de plages de contact pour le raccordement électrique du microcircuit à un circuit d'exploitation.

On rappelle également que selon un procédé connu de fabrication d'une telle carte, le support de la carte de circuit intégré est réalisé par moulage d'une matière plastique ou par lamination, puis le microcircuit est incorporé dans le support de carte- au cours d'une opération dite "encartage". En pratique, on vient coller le microcircuit dans une cavité prévue à cet effet dans le support.

On rappelle également que jusqu'à présent, une carte à circuit intégré à contact de format réduit (mini-carte) par rapport au format standard, est réalisée à partir du procédé de fabrication d'une carte de format standard que l'on termine par une opération de pré-découpe partielle du support de carte pour délimiter une région comprenant la zone des contacts.

C'est donc dans ce support que l'on vient ensuite réaliser la carte de format réduit, en réalisant une fente de contour qui est formée dans ce support autour d'une portion interne comportant le microcircuit et les plages de contact. Cette fente permet de limiter la carte répondant au deuxième format correspondant à la mini-carte, laquelle se trouve reliée à la carte de format standard par des bretelles que l'on a pris soin de laisser lors de la formation de la fente contour de manière à ce que la carte de format standard serve de support à la mini-carte.

La mini-carte est détachée soit en découpant une bretelle à l'aide d'un outil, soit en provoquant la rupture de ces bretelles par pression sur la portion interne à l'aide d'un outil ou plus simplement avec le doigt.

Ce n'est qu'à la fin de la fabrication de la carte que la pré-découpe est réalisée, par exemple par poinçonnage ou à l'aide d'un outil de découpe tel qu'un faisceau laser ou un jet d'eau à haute pression.

Un exemple de réalisation d'une telle carte est par exemple décrit dans le document EP A-0 521 778.

Le document DE-U-298 19 389 décrit la réalisation d'une mini-carte dans un corps de carte standard ISO. En particulier, la mini carte est comprise à l'intérieur de la surface de la carte ISO qui l'entoure au moins sur 3 côtés.

Ce document DE-U-298 19 389 décrit l'obtention d'une mini-carte à partir d'un corps de carte standard ISO. En particulier, trois côtés de la mini carte sont définis par une prédécoupe dans la carte ISO tandis que le quatrième correspond à un bord de la carte ISO.

Le document EP-A-0 535 436 décrit une mini- carte pouvant être extraite et mise en place dans une cavité d'un corps de carte standard au format ISO à l'aide d'une bande adhésive placée au verso du corps et présentant une portion adhésive en regard de la cavité de réception de la mini-carte.

Le document EP-A-0 254 444 décrit un module de circuit intégré disposé sur un circuit imprimé en forme de ruban et moulé avec de la résine.

Le marché de la téléphonie mobile est en constante mutation et tend vers une miniaturisation au maximum des terminaux mobiles. De ce fait, la miniaturisation du format mini-carte semble une nécessité afin de ne pas pénaliser la miniaturisation des terminaux.

On s'oriente donc vers une réduction du format des cartes destinées à équiper les nouvelles générations de téléphones mobiles tout en cherchant à conserver la taille des circuits intégrés et même à l'augmenter.

C'est à cette nouvelle génération de dispositifs portables que l'on s'intéresse. En effet, les dispositifs portables à mini-carte tels que proposés jusqu'à présent sont constitués par la carte de format standard ISO. Ceci s'avère être une technique lourde à mettre en oeuvre pour les dispositifs portables nouvelle génération qui vont avoir des dimensions encore plus réduites que ceux proposés jusqu'à aujourd'hui.

La présente invention propose d'apporter une solution plus économique car mieux adaptée aux dimensions très réduites des dispositifs portables à circuit intégré dédiés aux nouvelles générations de téléphones mobiles tout en permettant une manipulation aisée de ces dispositifs et en conservant les avantages de la personnalisation graphique.

L'invention concerne un dispositif portable à circuit intégré comportant un corps support et une mini-carte détachable portant le circuit intégré, principalement caractérisé en ce que la mini-carte est disposée à une extrémité du corps support.

Selon un premier mode de réalisation, la mini-carte est reliée au corps support par une ligne de rupture.

Selon un deuxième mode de réalisation, la mini-carte est reliée au corps support par un adhésif disposé sur une de ses faces principale.

Selon une autre caractéristique, le corps support a la forme d'une languette.

Avantageusement, la languette est rectangulaire.

Avantageusement, la languette a une largeur sensiblement égale à celle de la mini-carte.

L'invention a également pour objet un procédé de fabrication d'un dispositif portable à circuit intégré pour lequel on a au préalable reporté les circuits intégrés sur un film support comportant les plages de contact et connecté lesdits circuits intégrés aux plages de contact correspondante formant ainsi des micromodules, principalement caractérisé en ce qu'il comporte les étapes suivantes :
- mise en place du film support comprenant une pluralité de micromodules dans un moule à injection,
- surmoulage dudit film côté opposé aux plages de contact, par une matière plastique de manière à former un panneau,
- découpe du panneau de manière à obtenir des corps support comportant à l'une de leurs extrémités la mini-carte formée par le micromodule logé dans la matière plastique.

Selon une autre caractéristique, le procédé comporte une. étape de prédécoupe de l'extrémité des corps support.

Selon un mode de réalisation, la prédécoupe est réalisée pendant l'opération de surmoulage, le moule ayant une forme adaptée pour obtenir cette prédécoupe.

Selon un autre mode de réalisation, la prédécoupe est réalisée lors de la découpe des corps support.

Dans le cas où le film support est un diélectrique, la matière du diélectrique est identique à celle de la matière plastique surmoulée.

D'autres particularités et avantages de l'invention apparaîtront clairement à la lecture de la description qui est faite ci-après, qui est donnée à titre d'exemple non limitatif et en regard des dessins sur lesquels :
- la figure 1, représente le schéma d'un premier mode de réalisation d'un dispositif conforme à l'invention,
- la figure 2, représente une vue en coupe transversale selon la figure 1,
- la figure 3, représente la mini carte obtenue après détachement de l'extrémité du dispositif 1,
- la figure 4, représente un schéma d'un deuxième mode de réalisation d'un dispositif conforme à l'invention,
- la figure 5, représente une vue en coupe transversale selon la figure 4,
- les figures 6A et 6B illustrent le procédé de fabrication dans une variante de réalisation,
- la figure 7 illustre le procédé dans une autre variante de réalisation.

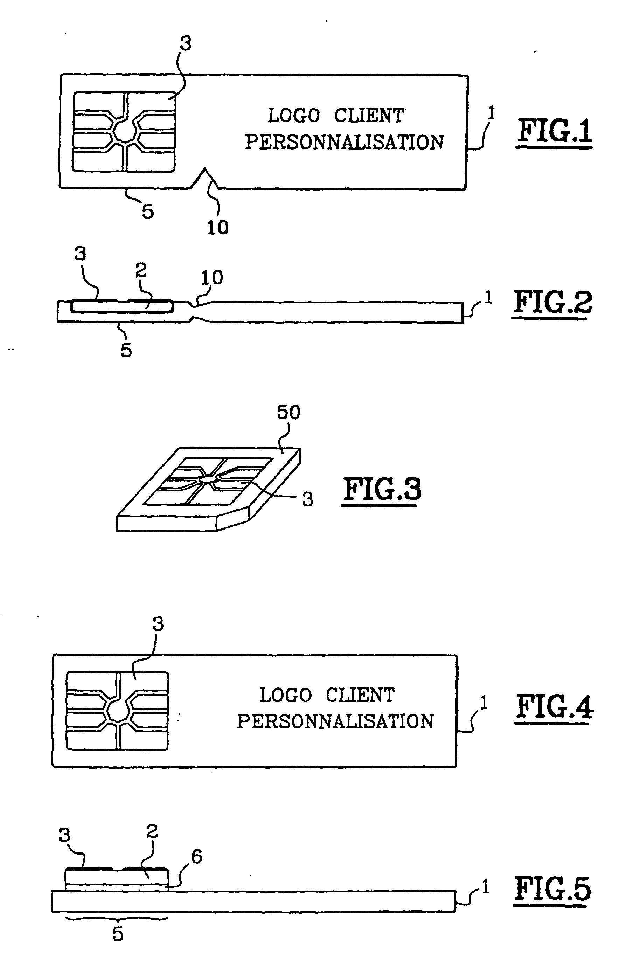

Le dispositif illustré sur les figures 1 à 5 se présente sous la forme d'une languette (ou bande) plastique de type PVC ou ABS. Cette languette pourra être obtenue par moulage puis par usinage des mini-cartes destinées à recevoir les micromodules ou de préférence par surmoulage du micromodule dans le cas du mode de réalisation représenté sur les figures 1 et 2.

Le dispositif portable à circuit intégré 2 comporte donc un corps support 1 de forme allongée ayant une extrémité libre 5 et une mini-carte disposée à cette extrémité 5 du corps 1, et plus précisément dans cette extrémité 5.

Le circuit intégré 2 pourrait être collé dans la cavité formée à l'extrémité 5 de la languette support. Cependant, selon le procédé de fabrication proposé pour ce mode de réalisation, le micromodule (ensemble formé par le circuit intégré, les plages de contact et les liaisons électriques entre le circuit intégré et les plages de contact) est fixé en opérant un surmoulage par injection de matière dans un moule, le micromodule étant placé dans ledit moule.

La mini-carte est reliée au corps support par une ligne de rupture qui peut être réalisée par des séries de points perforés, des bretelles, un amincissement de l'épaisseur du corps.

Avantageusement, l'extrémité 5 comporte une prédécoupe partielle 10 en épaisseur et en largeur pour permettre de détacher cette extrémité du reste de la languette et obtenir la mini-carte 50 à circuit intégré dénommée dans la suite mini-SIM 3G. On pourra détacher l'extrémité 5 soit avec un outil de découpe soit en faisant pivoter l'extrémité autour de l'axe de la découpe.

De préférence, la languette support aura une largeur sensiblement égale à celle de la carte mini-SIM 3G. L'avantage est d'optimiser la surface à personnaliser sans inconvénient de fabrication.

Dans le cas du deuxième mode de réalisation de la languette support illustré par les figures 4 et 5, la mini-carte est constituée par le micromodule qui est fixé à la surface de la languette par un adhésif double face 6 par exemple.

Ainsi, la mini-carte pourra être détachée de la languette et être mise en place dans un téléphone mobile nouvelle génération.

L'invention propose un procédé de fabrication particulièrement adapté au premier mode de réalisation des dispositifs portables, décrits à propos des figures 1 et 2.

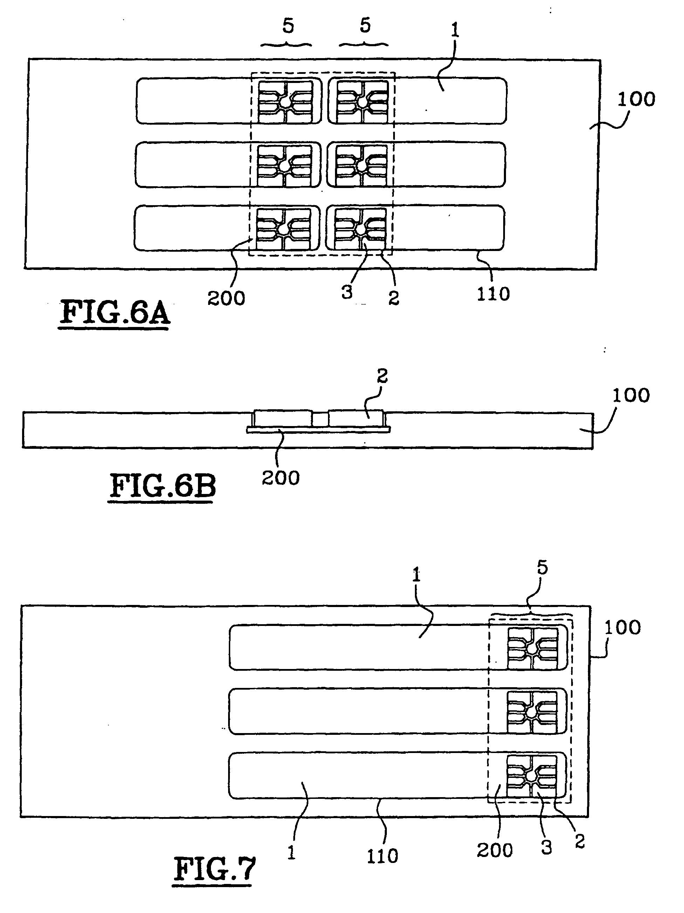

Les figures 6A, 6B et 7 illustrent ce procédé. On réalise un surmoulage sur le film support 200 des micromodules 2-3.

En effet, dans la technique de fabrication des dispositifs potables on utilise la technique de fabrication des micromodules avant l'étape d'encartage. A ce stade, les circuits intégrés sont fixés sur un film support qui peut être constitué d'un film dilélectrique portant sur sa deuxième face la grille de contacts métallique ou, directement sur la grille de contacts métalliques, le circuit intégré étant collé par une matière isolante sur cette grille.

Dans tous les cas, à ce stade les plots de contact des circuits intégrés sont reliés électriquement aux plages de contact correspondantes.

Il est donc proposé selon l'invention de découper des tronçons de film support 200 de manière à avoir 2 x n micromodules 2-3 (figure 6A) ou 1 x n micromodules 2-3 (figure 7) et de disposer les tronçons de film 200 dans des moules à injection de matière plastique.

On obtient après l'injection un panneau 100 dans lesquels les micromodules 2 sont encastrés.

On découpe au moyen d'un outil approprié (poinçon, laser ou autre) des bandes ou languettes 1 selon les lignes de découpes 110 pour obtenir la forme représentée sur les schémas.

Dans le cas de la figure 6A, on obtiendra un plus grand nombre de languettes support que dans le cas de la figure 7. Cependant, si l'on conserve les mêmes moules, la variante illustrée par la figure 7 permettra d'avoir des languettes plus longues que celles de la figure 6A.

A titre d'exemple, les dimensions des languettes qui ont été réalisées sont comprises entre 4 et 9 cm pour la longueur et environ 10 mm pour la largeur.

## Revendications

1. Dispositif portable à circuit intégré comportant un corps support et une mini-carte détachable portant le circuit intégré, **caractérisé en ce que** le corps support est une languette d'une largeur sensiblement égale à celle de la mini carte et **en ce que** la mini-carte (2,3) est disposée à une extrémité de la languette.

2. Dispositif selon la revendication 1, **caractérisé en ce que** la mini-carte (2,3) est reliée au reste de la languette par une ligne de rupture (10).

3. Dispositif selon la revendication 1, **caractérisé en ce que** la mini-carte est reliée au corps support (1) par un adhésif (6) disposé sur une de ses faces principales, la mini carte étant placée sur l'adhésif.

4. Dispositif selon l'une quelconque des revendications précédentes, **caractérisé en ce que** la languette est rectangulaire.

5. Procédé de fabrication d'un dispositif portable à circuit intégré, et pour lequel on a au préalable reporté les circuits intégrés sur un film support comportant les plages de contact et connecté lesdits circuits intégrés aux plages de contact correspondantes formant ainsi des micromodules, **caractérisé en ce qu'**il comporte les étapes suivantes :
- mise en place du film support (200) comprenant une pluralité de micromodules (2,3)dans un moule à injection,
- surmoulage dudit film (200) côté opposé aux plages de contact, par une matière plastique de manière à former un panneau (100),
- découpe du panneau de manière à obtenir des corps support (1) comportant à l'une de leurs extrémités (5) la mini-carte (50) formée par le micromodule logé dans la matière plastique, où le corps support est une languette d'une largeur sensiblement égale à celle de la mini carte.

6. Procédé de fabrication selon la revendication 5, **caractérisé en ce qu'**il comporte une étape de prédécoupe de l'extrémité des corps support.

7. Procédé de fabrication selon la revendication 6, **caractérisé en ce que** la prédécoupe est réalisée pendant l'opération de surmoulage, le moule ayant une forme adaptée pour obtenir cette prédécoupe.

8. Procédé de fabrication selon la revendication 7, **caractérisé en ce que** la prédécoupe est réalisée lors de la découpe des corps support.

9. Procédé de fabrication selon l'une quelconque des revendications 5 à 8, **caractérisé en ce que** le film support (200) est un diélectrique dont la matière est identique à celle de la matière plastique surmoulée.

## Patentansprüche

1. Tragbare Vorrichtung mit integrierter Schaltung, mit einem Trägerkörper und einer herausnehmbaren, die integrierte Schaltung tragenden Minikarte, **dadurch gekennzeichnet, dass** der Trägerkörper eine Lasche mit einer Breite ist, die etwa derjenigen der Minikarte entspricht, und dass die Minikarte (2, 3) an einem Ende der Lasche angeordnet ist.

2. Vorrichtung nach Anspruch 1, **dadurch gekennzeichnet, dass** die Minikarte (2, 3) über eine Bruchlinie (10) mit dem Rest der Lasche verbunden ist.

3. Vorrichtung nach Anspruch 1, **dadurch gekennzeichnet, dass** die Minikarte über einen auf einer ihrer Hauptflächen aufgebrachten Klebstoff (6) mit dem Trägerkörper (1) verbunden ist, wobei die Minikarte auf dem Klebstoff angeordnet ist.

4. Vorrichtung nach einem der vorangehenden Ansprüche, **dadurch gekennzeichnet, dass** die Lasche rechteckig ist.

5. Herstellungsverfahren eines tragbaren Vorrichtung mit integrierter Schaltung, bei der man die integrierten Schaltungen zuvor auf einer Kontaktebereiche aufweisenden Trägerfolie aufgebracht und die besagten integrierten Schaltungen an die entsprechenden Kontaktbereiche angeschlossen hat, um somit Mikromodule zu bilden, **dadurch gekennzeichnet, dass** es die folgenden Schritte umfasst:
- Einsetzen der Trägerfolie (200) mit einer Vielzahl von Mikromodulen (2, 3) in eine Einspritzform,
- Abformen der besagten, den Kontaktbereichen gegenüberliegenden Folie (200) durch einen Kunststoff, um eine Platte (100) zu bilden,
- Ausschneiden der Platte, um Trägerkörper (1) zu erhalten, die an einem ihrer Enden (5) die Minikarte (50) umfassen, die durch das im Kunststoff gelagerte Mikromodul gebildet wird, wobei der Trägerkörper eine Lasche mit einer Breite ist, die etwa derjenigen der Minikarte entspricht.

6. Herstellungsverfahren nach Anspruch 5, **dadurch gekennzeichnet, dass** es einen Schritt zum Vorausschneiden des Endes der Trägerkörper umfasst.

7. Herstellungsverfahren nach Anspruch 6, **dadurch gekennzeichnet, dass** das Vorausschneiden während der Abformoperation erfolgt, wobei die Form so ausgebildet ist, dass sie diesem Vorausschnitt angepasst ist.

8. Herstellungsverfahren nach Anspruch 7, **dadurch gekennzeichnet, dass** das Vorausschneiden während des Ausschneidens der Trägerkörper erfolgt.

9. Herstellungsverfahren nach einem der Ansprüche 5 bis 8, **dadurch gekennzeichnet, dass** die Trägerfolie (200) ein Nichtleiter ist, dessen Material identisch mit demjenigen des abgeformten Kunststoffs ist.

## Claims

1. A portable integrated circuit device comprising a support body and a detachable mini-card carrying the integrated circuit, **characterised in that** the support body is a tongue with a width substantially equal to that of the mini-card, and **in that** the mini-card (2, 3) is disposed at one end of the tongue.

2. A device according to Claim 1, **characterised in that** the mini-card (2, 3) is connected to the rest of the tongue by a breakage line (10).

3. A device according to Claim 1, **characterised in that** the mini-card is connected to the support body (1) by an adhesive (6) disposed on one of its main faces, the mini-card being placed on the adhesive.

4. A device according to any one of the preceding claims, **characterised in that** the tongue is rectangular.

5. A method of manufacturing a portable integrated circuit device, and for which the integrated circuits have first been transferred onto a support film comprising the contact areas and said integrated circuits have been connected to the corresponding contact areas thus forming micromodules, **characterised in that** it comprises the following steps:
- putting the support film (200) comprising a plurality of micromodules (2, 3) in place in an injection mould;
- overmoulding said film (200), on the side opposite to the contact areas, with a plastic material so as to form a panel (100);
- cutting up the panel so as to obtain support bodies (1) comprising at one of their ends (5) the mini-card (50) formed by the micromodule housed in the plastic material, where the support body is a tongue with a width substantially equal to that of the mini-card.

6. A manufacturing method according to Claim 5, **characterised in that** it comprises a step of pre-cutting the end of the support bodies.

7. A manufacturing method according to Claim 6, **characterised in that** the pre-cutting is carried out during the overmoulding operation, the mould having a shape adapted for obtaining this pre-cutting.

8. A manufacturing method according to Claim 7, **characterised in that** the pre-cutting is carried out during the cutting out of the support bodies.

9. A manufacturing method according to any one of Claims 5 to 8, **characterised in that** the support film (200) is a dielectric whose material is identical to that of the overmoulded plastic material.
